# FASCICULE DE BREVET EUROPEEN

(11) **EP 0 608 940 B1**
(45) Date de publication et mention de la délivrance du brevet: **26.04.2006**
(21) Numéro de dépôt: 94200127.2
(22) Date de dépôt: 19.01.1994
(51) Int. Cl.: C08L 27/16

(54) **Compositions polymériques destinées à la fabrication de câbles et de tuyauteries flexibles et articles à base de ces compositions**
Polymerzusammensetzungen für die Herstellung von Kabeln und flexiblen Rohrleitungen sowie Gegenstände auf der Basis dieser Zusammensetzungen
Polymer compositions for the production of cables and flexible pipelines as well as articles based on these compositions

(30) Priorité: 25.01.1993 BE 9300070
(43) Date de publication de la demande: 03.08.1994
(73) Titulaire: SOLVAY (Société Anonyme), 1050 Bruxelles (BE)
(72) Inventeur: Lasson, Pierre, B-1020 Bruxelles (BE); Lambert, Yves-Julien, B-1325 Chaumont-Gistoux (BE); VanderVeken, Yves, B-3000 Leuven (BE); Maquet, Nestor, B-5406 Waha (BE); Thulliez, Vincent, B-1030 Bruxelles (BE)
(74) Mandataire: Jacques, Philippe

(56) Documents cités:
- DE-A- 2 442 173
- US-A- 3 769 371
- US-A- 4 302 556

## Description

La présente invention concerne des compositions polymériques à base de polymères fluorés, adaptées notamment à la fabrication de câbles électriques, de corps creux et de tuyauteries flexibles destinées par exemple au transport de carburants. Elle concerne également les câbles, tuyaux, corps creux et autres articles partiellement ou totalement constitués à partir de ces compositions.

Lors de leur utilisation, les câbles électriques sont couramment soumis à des sollicitations à la fois mécaniques et thermiques, préjudiciables à l'intégrité de leurs isolants. C'est ce qui explique l'utilité de normes telles la qualification UL 444 (mise au point par les Underwriters Laboratories Inc.), qui est un test de vieillissement consistant à soumettre les câbles à une température élevée (136 °C pour le "rating 125 °C" et 158 °C pour le "rating 150 °C") pendant plusieurs jours (7 à 150 jours) et à vérifier ensuite que l'allongement et la contrainte de rupture ne se sont pas modifiés de plus de 50 %. En vue de fabriquer des câbles électriques capables de satisfaire à ces normes, une solution consiste à gainer les câbles d'une couche de PVDF (polyfluorure de vinylidène), seule ou combinée à d'autres couches polymériques, par exemple à base de polyéthylène, de PVC ou d'autres polymères fluorés. Le PVDF homopolymère est cependant une résine de rigidité élevée, aussi est-il préférable d'utiliser des copolymères du VF₂ (fluorure de vinylidène) et d'autres monomères fluorés, tels que l'HFP (hexafluoropropylène), plus souples. De tels copolymères présentent cependant le désavantage d'une température de fusion nettement inférieure à celle du PVDF homopolymère, l'écart pouvant atteindre 40 °C. Il est cependant clair que la température de fusion des compositions utilisées a intérêt à être supérieure aux températures appliquées au cours du test de vieillissement décrit ci-dessus.

Une autre application dans laquelle d'excellentes propriétés thermo-mécaniques sont requises est celle des tuyauteries flexibles, et en particulier celle des canalisations pour circuits de carburant utilisées dans les véhicules automobiles ("fuel lines").

Ces canalisations doivent répondre à des exigences multiples, comme par exemple :
- une bonne résistance chimique et imperméabilité vis-à-vis des carburants utilisés, y compris ceux contenant du méthanol,
- une bonne résistance aux chocs, même aux faibles températures,
- permettre des températures d'utilisation pouvant atteindre 100 à 150 °C.

Le PVDF homopolymère excelle en ce qui concerne la perméabilité, mais présente une rigidité élevée et une mauvaise résistance aux chocs à froid ("dart drop test" à -40 °C). La plupart des polyamides (tel le PA 12) possèdent des propriétés inverses : une bonne résilience à froid mais une perméabilité trop élevée et, en outre, une température maximale d'utilisation limitée. Le polyéthylène présente également ces deux derniers inconvénients.

Une solution envisageable pourrait être d'incorporer à du PVDF un ou plusieurs plastifiants destinés à en améliorer les propriétés mécaniques aux basses températures, mais il se pose alors, dans le cas des canalisations de transport de carburants, le problème de l'extraction de ces plastifiants par les fluides transportés, qui risque de conduire à une fragilisation progressive des canalisations.

Alternativement, dans le brevet belge 832.851 (Dynamit Nobel A.G.), qui concerne un mélange PVDF - copolymère élastomérique fluoré (par exemple VF₂-HFP), pour lui conférer une résilience et un allongement à la rupture élevés sans en affecter excessivement la résistance à la chaleur (le point Vicat), on recommande fortement de réticuler l'élastomère, et éventuellement d'ensuite recuire les articles ainsi produits. Ces opérations requièrent naturellement l'usage d'additifs spéciaux (agents de réticulation, accélérateurs de vulcanisation) et des étapes de fabrication supplémentaires. On déconseille, en outre, dans ce document de dépasser une teneur en copolymère de plus de 30 % en poids dans de tels mélanges.

Dans le contexte des câbles électriques comme dans celui des tuyauteries flexibles,la présente invention vise à fournir des compositions polymériques aux propriétés thermo-mécaniques améliorées, qui dispensent, en outre, de l'usage d'un plastifiant. En outre, les compositions de l'invention présentent l'avantage de ne pas nécessiter une réticulation ultérieure.

En l'occurrence, l'invention concerne des compositions polymériques à base de PVDF homopolymère et de copolymère fluoré, destinées notamment à la fabrications de câbles électriques et de tuyauteries flexibles, comprenant, en poids :
(A) environ de 25 à 75 % d'au moins un PVDF homopolymère;
(B) environ de 25 à 75 % d'au moins un copolymère thermoplastique du VF₂ et d'au moins un autre monomère fluoré, présentant une teneur en cet autre monomère d'environ 5 à 25 % en poids.

De manière plus précise, les compositions polymériques selon l'invention sont des mélanges comprenant :
a) au moins un PVDF homopolymère (A), dans des proportions pondérales d'au moins environ 25 %, de préférence supérieures à 30 %, et ne dépassant pas environ 75 %, de préférence inférieures à 70 %, de manière particulièrement préférée inférieures à 45 %, et idéalement inférieures à 40 %.
b) au moins un copolymère (B) thermoplastique du VF₂ (fluorure de vinylidène) et d'au moins un autre monomère fluoré, la teneur pondérale de cet autre comonomère dans le copolymère étant d'au moins environ 5 %, de préférence au moins 10 %, et ne dépassant pas environ 25 %, de préférence 20 %, de manière particulièrement préférée 17 %; ce copolymère étant présent dans le mélange dans des proportions d'au moins 25 %; de préférence supérieures à 30 %, de manière particulièrement préférée supérieures à 55 %, idéalement supérieures à 60 %, et ne dépassant pas environ 75 %, de préférence inférieures à 70 % (en poids). A titre de comonomères fluorés utilisables, le CTFE (chlorotrifluoréthylène) et l'HFP (hexafluorure de propylène) donnent de très bons résultats.

Grâce à l'incorporation selon l'invention du copolymère thermoplastique (B) à l'homopolymère (A), on assure aux compositions, et donc en fin de compte aux câbles, tuyaux ou autres articles qui en seront constitués, un effet de plastification permanente et une large plage de températures d'utilisation. A cette fin, il est indispensable que le copolymère B soit thermoplastique (c'est-à-dire, du moins dans le présent contexte, semi-cristallin), et non élastomérique. Par "élastomérique", on entend désigner, comme défini par l'ASTM dans la Special Technical Publication n° 184, un matériau pouvant être étiré, à la température ambiante, à deux fois sa longueur initiale et qui, une fois relâché, reprend rapidement sa longueur initiale, à 10 % près. Bien qu'il puisse paraître surprenant que l'addition d'un copolymère thermoplastique conduise à une meilleure plastification que l'addition d'un copolymère élastomérique, les exemples confirment que seule l'utilisation d'un copolymère B thermoplastique induit un effet de plastification significatif, contrairement à l'utilisation d'un copolymère B élastomérique du VF₂. On observe aussi qu'un tel copolymère élastomérique se révèle immiscible au PVDF, ne conduit qu'à l'amélioration de la résistance aux chocs, et donne un mélange biphasique (hétérogène) de rigidité élevée. Les compositions selon l'invention, au contraire, peuvent être considérés comme le résultat d'une cocristallisation et sont monophasiques.

Un avantage inattendu et particulièrement important d'un tel mélange d'homopolymère (A) et de copolymère (B) est qu'il présente un effet synergique en ce qui concerne sa température de fusion et sa résistance au fluage à haute température (reflétée par exemple par son point Vicat), qui est supérieure non seulement à celle d'un copolymère seul, à teneurs globales en comonomère fluoré égales, mais également à la moyenne des températures de fusion de l'homopolymère et du copolymère thermoplastique pondérées par leurs proportions respectives.

On peut encore ajouter aux compositions décrites ci-dessus tous les additifs habituels tels qu'adjuvants de mise en oeuvre, pigments, matières de charge, renforts fibreux, particules conductrices de l'électricité, etc. sans sortir du cadre de la présente invention.

Les compositions de l'invention peuvent être obtenues par toutes les techniques habituelles de préparation de compositions polymériques, notamment par mélange préalable des différents polymères à l'état de poudres ou de granules (ainsi qu'éventuellement avec les autres additifs ou matières de charge), dans les proportions souhaitées, avant de les soumettre à une technique de mise en oeuvre thermomécanique telle que l'extrusion, l'injection, le gainage, etc.

Ce mode opératoire peut être appliqué soit en vue de fabriquer des produits finis tels que par exemple des tuyaux, soit, en y ajoutant une étape de granulation, en vue de disposer de granules contenant les polymères, additifs et charges souhaités dans les proportions convenables, ce qui facilite une transformation subséquente en produits finis.

Pour les raisons exposées ci-dessus et notamment grâce à leurs propriétés mécaniques restant favorables dans une large plage de températures, les compositions selon l'invention se révèlent particulièrement appropriées à la fabrication de câbles et tuyauteries flexibles soumis à des conditions sévères d'utilisation, mais ceci ne représente que deux de leurs applications potentielles, d'autres articles constitués au moins partiellement de ces compositions faisant tout autant l'objet de la présente invention que les câbles et tuyauteries flexibles, par exemple des corps creux tels que des réservoirs à carburant ou des boîtiers d'appareils électriques.

L'invention vise également à fournir des câbles, tuyauteries flexibles, corps creux et autres articles à plusieurs couches de matières thermoplastiques, l'une au moins de ces couches étant constituée d'une composition conforme à l'invention. De tels objets peuvent être fabriqués par de nombreuses techniques connues, telles que la coextrusion, le surmoulage, etc.

Les exemples ci-après visent à illuster l'invention. Les exemples 3, 4, 5, 9, 10, 14 et 17 sont réalisés selon l'invention; les autres exemples (1R, 2R, 6R, 7R, 8R, 11R, 12R, 13R, 15R et 16R) sont donnés à titre de comparaison.

### EXEMPLES

### Exemples 1R à 5 - Supériorité d'un mélange homopolymère/ copolymère thermoplastique par rapport à un copolymère seul

L'exemple 1R se rapporte à un PVDF homopolymère (commercialisé par SOLVAY sous la marque SOLEF ^{R} 1010), l'exemple 2R à un copolymère thermoplastique VF₂-HFP (SOLEF 21010), et l'exemple 3 au mélange de l'homopolymère (SOLEF 1010) avec un copolymère thermoplastique VF₂-HFP (SOLEF 21508) dans des proportions pondérales respectives 33:67. La composition 3 et le copolymère 2R ont ainsi une teneur globale en HFP identique. L'exemple 4 correspond à un mélange de PVDF homopolymère (SOLEF 1015) avec un copolymère thermoplastique VF₂-CTFE (SOLEF 31508), dans des proportions 33:67.

L'exemple 5 correspond à un mélange des mêmes polymères (SOLEF 1015 et 31508) dans des proportions 67/33.

Pour chaque composition, on a mesuré les élongations au seuil d'écoulement (Ee) et à la rupture (Er) à 23 °C (selon la norme ASTM D 638), le module de traction (E) (même norme), la résistance à l'impact (IZOD, à -40 °C, selon la norme ASTM D 256), ainsi que les températures de transition vitreuse (Tg) et de fusion (Tf) [mesurées respectivement par DMTA (dynamic-mechanical thermal analysis) et calorimétrie DSC (differential scanning calorimetry)]. Sauf indication contraire, ces mêmes méthodes de mesure seront également utilisées dans les autres exemples. Les valeurs relevées sont reprises au tableau 1, ci-après.

**TABLEAU 1**

| Exemples | 1R | 2R | 3 | 4 | 5 |
|---|---|---|---|---|---|
| Ee, % | 7 | 14 | 13 | 14 | 10 |
| Er, % | 50 | 480 | 410 | 503 | 350 |
| E, X | 2415 | 876 | 879 | 722 | 1300 |
| Rés. impact IZOD, J/m | 31 | 39 | 33 | 1200 | 1000 |
| Tg, °C | -32 | -29 | -31 | -27 | -28 |
| Tf, °C | 174 | 144 | 170 | 170 | 173 |

On constate les bonnes propriétés des compositions 3, 4 et 5 par rapport au copolymère seul. On note également que la température de fusion de la composition 3 est beaucoup plus proche de celle de l'homopolymère 1R (T_{f1}) que de celle du copolymère 2R (T_{f2}), malgré la prépondérance pondérale de copolymère dans la composition 3.

### Exemples comparatifs 6R et 7R - Inconvénients des mélanges homopolymère/copolymère élastomériques

Dans les exemples 6R et 7R, on a préparé des compositions comprenant chacune un même PVDF homopolymère (SOLEF 1010) et un copolymère VITON ^{R} différent, dans des proportions pondérales 75:25. Ces copolymères, commercialisés par du Pont, sont essentiellement composés de VF₂ et d'HFP, et sont du type élastomérique, et non thermoplastique comme selon la présente invention. (Le VITON A est un copolymère VF₂-HFP et le VITON B70 un terpolymère VF₂-HFP-tétrafluoroéthylène). Les proportions ont été choisies de manière à comparer des compositions de même teneur globale en HFP. Une composition contenant 33 % de PVDF homopolymère et 67 % de copolymère élastomérique VITON, aurait par ailleurs été impossible à mettre en oeuvre par fusion thermoplastique.

Les valeurs mesurées pour ces types de compositions sont reprises au tableau 2 ci-après.

**TABLEAU 2**

| Exemples | 6R | 7R |
|---|---|---|
| Copolymère VITON | A | B70 |
| Ee, X | 6 | 8 |
| Er, % | 19 | 37 |
| E, % | 1685 | 1531 |
| Tg, °C | -31/-13 | -30/-17 |
| Tf, °C | 173 | 172 |

On constate par comparaison avec l'exemple 3 que les copolymères élastomériques ne conduisent qu'à un effet de plastification extrêmement faible et à des propriétés mécaniques médiocres.

Des microphotographies électroniques par transmission (TEM) réalisées avec des grossissements de 2000 x et 10000 x révèlent, par ailleurs, une structure nodulaire (biphasique, comprenant des nodules d'environ 1 µm) pour les compositions des exemples 6R et 7R, tandis qu'elles montrent une structure homogène (monophasique) pour la composition de l'exemple 3, conforme à l'invention.

### Exemples 8R à 11R - Propriétés à froid

Diverses compositions contenant du PVDF homopolymère ainsi que, pour les exemples 9 à 11R, différents copolymères du VF₂ (sans plastifiants), toutes de même teneur globale en comonomère fluoré en ce qui concerne les exemples 9 à 11R, ont été préparées et testées quant à leur température de fragilisation T_{frag} (mesurée selon la norme ASTM D 746, procédure A). La résine VITON A est un copolymère VF₂-HFP de proportions pondérales 60:40.

L'exemple comparatif 8R se rapporte à du PVDF homopolymère seul.

Le tableau 3, ci-après, reprend les valeurs mesurées.

**TABLEAU 3**

| Exemples | 8R | 9 | 10 | 11R |
|---|---|---|---|---|
| Copolymère | - | VF₂ - HFP | VF₂ - CTFE | VITON A |
| teneur, % | 0 | 65 | 65 | 25 |
| T_{frag}, °C | +8 | -15 | -20 | -2 |

On constate qu'à même teneur globale en comonomère, la tenue à froid des compositions contenant un copolymère thermoplastique (9, 10) est nettement supérieure à celle des compositions contenant un copolymère élastomérique (11R).

### Exemples 12R à 14 - Perméabilité aux carburants

On a mesuré les pertes en carburant de tubes constitués de différents matériaux, de 6 mm de diamètre intérieur, d'1 mm d'épaisseur et d'une longueur d'1 m, raccordés à un réservoir contenant un carburant composé d'essence RF08A85 et de méthanol dans des proportions pondérales 90:10. Le tube de l'exemple 14, conforme à l'invention, est composé d'homopolymère SOLEF 1015 et de copolymère VF₂-CTFE SOLEF 31508 dans des proportions 33:67.

Les pertes constatées sont reprises au tableau 4.

**TABLEAU 4**

| Exemple | Nature du tube | Pertes (g/m/jour) |
|---|---|---|
| 12R | Polyamide PA 12 plastifié | 1.5 |
| 13R | PVDF homopolymère (SOLEF 1010) | <0.05 (non détectable) |
| 14 | Mélange PVDF + copolymère | 0.05 |

### Exemples 15R à 17 - Perméabilité aux carburants

On a également la perméabilité (exprimée en g de CH₃OH.mm/m².jour), à 50°C, de différents films par rapport à un carburant composé d'essence RF08A85 et de méthanol dans des proportions pondérales 65:35. Les polymères utilisés pour la réalisation de ces films sont respectivement les mêmes que ceux utilisés dans les exemples 12R à 14.

**TABLEAU 5**

| Exemple | Nature du tube | Epaisseur du film (mm) | Perméabilité (g.mm/m².jour) |
|---|---|---|---|
| 15R | Polyamide 12 plastifié | 1.01 | 510 |
| 16R | PVDF homopolymère | 0.03 | 6 |
| 17 | Mélange PVDF + copolymère | 0.042 | 14 |

Il faut noter que la fraction du carburant ayant traversé les films constitués de polymères fluorés contenait essentiellement du méthanol (> 90 %), alors qu'elle contenait une quantité non négligeable d'essence (18 %) dans le cas du film de PA plastifié.

## Revendications

1. Compositions polymériques à base de PVDF homopolymère et de copolymère fluoré, **caractérisées en ce qu'**elles comprennent un mélange de polymères fluorés comprenant, en poids :
(A) de 25 à 45 % d'au moins un PVDF homopolymère;
(B) de 55 à 75 % d'au moins un copolymère thermoplastique du VF₂ et de l'hexafluoropropylène, présentant une teneur en hexafluoropropylène de 5 à 25 % en poids.

2. Compositions selon la revendication 1, **caractérisées en ce qu'**elles comprennent au moins 60 % en poids de copolymère thermoplastique.

3. Compositions selon la revendication 1 ou 2, **caractérisées en ce qu'**elles comprennent moins de 70 % en poids de copolymère thermoplastique.

4. Compositions selon l'une des revendications 1 à 3, **caractérisées en ce que** la teneur en hexafluoropropylène ne dépasse pas 20 % en poids.

5. Compositions selon la revendication 4, **caractérisées en ce que** la teneur en hexafluoropropylène ne dépasse pas 17 % en poids.

6. Compositions selon la revendication 5, **caractérisées en ce que** la teneur en hexafluoropropylène est d'au moins 10 % en poids.

7. Compositions polymériques à base de PVDF homopolymère et de copolymère fluoré, **caractérisées en ce qu'**elles comprennent un mélange de polymères fluorés comprenant, en poids :
(A) de 25 à 75 % d'au moins un PVDF homopolymère;
(B) de 25 à 75 % d'au moins un copolymère thermoplastique du VF₂ et du chlorotrifluoroéthylène présentant une teneur en chlorotrifluoroéthylène de 5 à 25 % en poids.

8. Compositions selon la revendication 7, **caractérisées en ce qu'**elles comprennent au moins 55 % en poids de copolymère thermoplastique.

9. Compositions selon la revendication 7 ou 8, **caractérisées en ce qu'**elles comprennent moins de 70 % en poids de copolymère thermoplastique.

10. Compositions selon l'une des revendications 7 à 9, **caractérisées en ce que** la teneur en chlorotrifluoroéthylène ne dépasse pas 20 % en poids.

11. Compositions selon la revendication 10, **caractérisées en ce que** la teneur en chlorotrifluoroéthylène ne dépasse pas 17 % en poids.

12. Compositions selon la revendication 11, **caractérisées en ce que** la teneur en chlorotrifluoroéthylène est d'au moins 10 % en poids.

13. Câbles électriques dont la gaîne d'isolation comporte au moins une couche constituée d'une composition polymérique selon l'une des revendications 1 à 12.

14. Tuyauteries flexibles comportant au moins une couche constituée d'une composition polymérique selon l'une des revendications 1 à 12.

15. Canalisations pour circuits de carburant comportant au moins une couche constituée d'une composition polymérique selon l'une des revendications 1 à 12.

16. Corps creux et autres articles comprenant une composition polymérique selon l'une des revendications 1 à 12.

## Patentansprüche

1. Polymerzusammensetzungen auf der Basis von PVDF-Homopolymer und Fluorcopolymer, **dadurch gekennzeichnet, dass** sie ein Gemisch von Fluorpolymeren umfassen, das :
(A) 25 bis 45 Gew.% wenigstens eines PVDF-Homopolymers;
(B) 55 bis 75 Gew.% wenigstens eines thermoplastischen Copolymers von VF₂ und Hexafluorpropylen, das einen Hexafluorpropylengehalt von 5 bis 25 Gew.% aufweist,
umfasst.

2. Zusammensetzungen nach Anspruch 1, **dadurch gekennzeichnet, dass** sie wenigstens 60 Gew.% an thermoplastischem Copolymer umfassen.

3. Zusammensetzungen nach Anspruch 1 oder 2, **dadurch gekennzeichnet, dass** sie wenigstens 70 Gew.% an thermoplastischem Copolymer umfassen.

4. Zusammensetzungen nach einem der Ansprüche 1 bis 3, **dadurch gekennzeichnet, dass** der Hexafluorpropylengehalt nicht über 20 Gew.% beträgt.

5. Zusammensetzungen nach Anspruch 4, **dadurch gekennzeichnet, dass** der Gehalt an Hexafluorpropylen nicht über 17 Gew.% beträgt.

6. Zusammensetzungen nach Anspruch 5, **dadurch gekennzeichnet, dass** der Gehalt an Hexafluorpropylen wenigstens 10 Gew.% beträgt.

7. Polymerzusammensetzungen auf der Basis von PVDF-Homopolymer und von Fluorcopolymer, **dadurch gekennzeichnet, dass** sie ein Gemisch von Fluorpolymeren umfassen, das :
(A) 25 bis 75 Gew.% wenigstens eines PVDF-Homopolymers;
(B) 25 bis 75 Gew.% wenigstens eines thermoplastischen Copolymers von VF₂ und Chlortrifluorethylen, das einen Chlortrifluorethylengehalt von 5 bis 25 Gew.% aufweist,
umfasst.

8. Zusammensetzungen nach Anspruch 7, **dadurch gekennzeichnet, dass** sie wenigstens 55 Gew.% an thermoplastischem Copolymer umfassen.

9. Zusammensetzungen nach Anspruch 7 oder 8, **dadurch gekennzeichnet, dass** sie wenigstens 70 Gew.% an thermoplastischem Copolymer umfassen.

10. Zusammensetzungen nach einem der Ansprüche 7 bis 9, **dadurch gekennzeichnet, dass** der Gehalt an Chlortrifluorethylen 20 Gew.% nicht überschreitet.

11. Zusammensetzungen nach Anspruch 10, **dadurch gekennzeichnet, dass** der Gehalt an Chlortrifluorethylen 17 Gew.% nicht überschreitet.

12. Zusammensetzungen nach Anspruch 11, **dadurch gekennzeichnet, dass** der Gehalt an Chlortrifluorethylen wenigstens 10 Gew.% beträgt.

13. Elektrische Kabel, deren Isolierhülle wenigstens eine Schicht aufweist, die aus einer Polymerzusammensetzung nach einem der Ansprüche 1 bis 12 gebildet ist.

14. Flexible Schläuche, die wenigstens eine Schicht aufweisen, die aus einer Polymerzusammensetzung nach einem der Ansprüche 1 bis 12 gebildet ist.

15. Leitungen für Treibstoffkreisläufe, die wenigstens eine Schicht aufweisen, die aus einer Polymerzusammensetzung nach einem der Ansprüche 1 bis 12 gebildet ist.

16. Hohlkörper und andere Gegenstände, die eine Polymerzusammensetzung nach einem der Ansprüche 1 bis 12 umfassen.

## Claims

1. Polymer compositions based on PVDF homopolymer and on fluorocopolymer, **characterized in that** they comprise a mixture of fluoropolymers comprising, by weight :
(A) from 25 to 45 % of at least one PVDF homopolymer
(B) from 55 to 75 % of at least one thermoplastic copolymer ofvinylidene fluoride (VF₂) and hexafluoropropylene, having a content of 5 to 25 by weight of hexafluoropropylene.

2. Compositions according to Claim 1, **characterized in that** they comprise at least 60 % by weight of thermoplastic copolymer.

3. Compositions according to Claim 1 or 2, **characterized in that** they comprise less than 70 % by weight of thermoplastic copolymer.

4. Compositions according to anyone of Claims 1 to 3, **characterized in that** the weight content of hexafluoropropylene in the thermoplastic copolymer does not exceed 20 %.

5. Compositions according to according to Claim 4, **characterized in that** the weight content of hexafluoropropylene in the thermoplastic copolymer does not exceed 17 %.

6. Compositions according to Claim 5, **characterized in that** the weight content of hexafluoropropylene in the thermoplastic copolymer is of at least 10%.

7. Polymer compositions based on PVDF homopolymer and on fluorocopolymer, **characterized in that** they comprise a mixture of fluoropolymers comprising, by weight:
(A) from 25 to 75 % of at least one PVDF homopolymer
(B) from 25 to 75 % of at least one thermoplastic copolymer of vinylidene fluoride (VF₂) and chlorotrifluoroethylene, having a content of 5 to 25 by weight of chlorotrifluoroethylene.

8. Compositions according to Claim 7, **characterized in that** they comprise at least 55 % by weight of thermoplastic copolymer.

9. Compositions according to Claim 7 or 8, **characterized in that** they comprise less than 70 % by weight of thermoplastic copolymer.

10. Compositions according to anyone of Claims 7 to 9, **characterized in that** the weight content of chlorotrifluoroethylene in the thermoplastic copolymer does not exceed 20 %.

11. Compositions according to according to Claim 10, **characterized in that** the weight content of chlorotrifluoroethylene in the thermoplastic copolymer does not exceed 17 %.

12. Compositions according to Claim 11, **characterized in that** the weight content of chlorotrifluoroethylene in the thermoplastic copolymer is of at least 10%.

13. Electrical cables, the insulating sheath of which comprise at least one layer consisting of a polymer composition according to anyone of Claims 1 to 12.

14. Flexible pipes comprising at least one layer consisting of a polymer composition according to anyone of Claims 1 to 12.

15. Conduits for fuel circuits comprising at least one layer consisting of a polymer composition according to anyone of Claims 1 to 12.

16. Hollow bodies comprising a polymer composition according to anyone of Claims 1 to 12.
